# EUROPEAN PATENT SPECIFICATION

(11) **EP 0 675 490 B1**
(45) Date of publication and mention of the grant of the patent: **17.05.2000**
(21) Application number: 95302126.8
(22) Date of filing: 28.03.1995
(51) Int. Cl.: G11B 19/00, G06F 3/06, G11B 19/20, G11B 27/10, G11B 21/08

(54) **Method for reducing rotational latency in a disc drive**
Verfahren zur Verkürzung der Rotationslatenz in einem Plattenantrieb
Méthode de réduction de la latence de rotation dans un entraînement de disque

(30) Priority: 28.03.1994 US 218787
(43) Date of publication of application: 04.10.1995
(73) Proprietor: SEAGATE TECHNOLOGY INTERNATIONAL, Georgetown, Grand Cayman Island (KY)
(72) Inventor: Heath, Mark A., Oklahoma City, Oklahoma 73170 (US)
(74) Representative: Kenyon, Sarah Elizabeth

(56) References cited:
- EP-A- 0 490 485
- PATENT ABSTRACTS OF JAPAN vol. 015 no. 041 (P-1160) ,31 January 1991 & JP-A-02 276083 (SEIKO INSTR INC) 9 November 1990,
- PATENT ABSTRACTS OF JAPAN vol. 013 no. 057 (P-825) ,9 February 1989 & JP-A-63 247987 (SEIKO INSTR & ELECTRONICS LTD) 14 October 1988,
- PATENT ABSTRACTS OF JAPAN vol. 013 no. 363 (P-918) ,14 August 1989 & JP-A-01 121920 (SEIKO INSTR & ELECTRON LTD) 15 May 1989,
- PATENT ABSTRACTS OF JAPAN vol. 016 no. 520 (P-1444) ,26 October 1992 & JP-A-04 191921 (TOSHIBA CORP) 10 July 1992,
- PATENT ABSTRACTS OF JAPAN vol. 014 no. 426 (P-1105) ,13 September 1990 & JP-A-02 165220 (FUJITSU LTD) 26 June 1990,

## Description

The present invention relates to seek operations in rotating media and in particular in rotating disc drive memory assemblies. More particularly, the present invention relates to a method for sorting the command queue to reduce rotational latency in disc drive memory assemblies.

Rotating disc memories include one or more discs driven about a vertical spindle axis. Each disc has a plurality of concentric tracks on one or both surfaces from which information is read or onto which information is written by a read/write element. In a disc drive system, a disc rotates at a high speed while the read/write element "flies" over the surface of the rotating disc. The read/write element is positioned over specific areas of the disc in accordance with commands received from the host computer.

The SCSI interface protocol provides a mechanism for host computers to send multiple commands to a disc drive. It allows the disc drive to determine the optimum order of execution for the commands. The set of commands available for execution by the disc drive is referred to as the "command queue".

Traditionally, disc drives have sorted the command queue in an order that minimizes the seek time between the various commands. However, seek time is only one of two components of the true access time of a command. The other component is the rotational latency time or the amount of time the disc drive spends waiting for the appropriate data to rotate under the read/write element. The rotational latency time is a significant part of the total access time for all but the longest seeks. On average, it is the dominant component of the total access time for relatively short seeks.

To determine the optimum order of execution of a set of commands, it is desirable to consider the full access time between commands rather than simply the seek time. An ideal sorting algorithm would sort the command queue in such a way that the sum of the access times of all of the commands in the queue is minimized. This would involve computing the sum of the access times for each of the possible orders of the queue. Computing access times for every possible order, however, is far too computationally intensive to do in a real-time system such as a disc drive. For example, there are over three million possible orders in a set of ten commands. Modern disc drives can have up to 64 or more commands in the command queue. In addition, the command queue in practical applications is dynamic. In other words, new commands are constantly received from the host computer. Thus, the optimum order of execution of previously received commands often changes, requiring the entire queue to be re-sorted.

Since the above-mentioned ideal algorithm is impractical, alternative methods of sorting have been devised. Several alternative disc scheduling algorithms are discussed in Seltzer et al., "disc scheduling revisited", Usenix Winter 1990 Technical Proceedings, pp. 313-324, January 22, 1990 (hereinafter "Disc Scheduling"). In addition to discussing the first come, first serve algorithms and the above described shorter seek first algorithm, the disc scheduling article discusses SCAN, CSCAN, shortest time first, grouped shortest time first and the weighted shortest time first algorithms. The scan scheduling algorithm orders commands by cylinder number and services all commands for a given cylinder before moving the head to the next cylinder. With the scan algorithm, commands addressing locations on ends of the disc have poor response time because the head must sweep across the disc twice before returning. The CSCAN or cylindrical scan algorithm alleviates this problem by paying one large seek at the end of the disc to move the head all the way to the other end of the disc.

The shortest time first algorithm selects the commands based upon the total access time including seek time and rotational latency. However, as discussed above, the shortest time first algorithm is impractical due to the large computation requirements. The grouped shortest time first algorithm divides the disc into a number of cylinder groups. The shortest time first algorithm is applied to a selected cylinder group to service commands before advancing to the next cylinder group. The weighted shortest time first algorithm applies the standard shortest time first technique but applies an ageing function to the time determined by the computer. For each shortest time first calculation, the total access time is multiplied by a weighting value w. The value w is computed by calculating how much time is left before the command will exceed a maximum allowed response time.

Another such disc scheduling algorithm is the shortest access time first algorithm discussed in Jacobson et al., "Disc Scheduling Algorithm Based On Rotational Positions", Hewlitt-Packard Laboratories Technical Report, HPL-CSP-91-7, February 26, 1991, pp. 5-18. The shortest access time first algorithm scans the command queue of pending commands and calculates an access time for each command given the known position of the read/write element (if the disc is idle), or the expected position of the read/write element at the end of the current command. The access time is calculated by using a static array containing seek times for each possible seek distance. To reduce the number of commands which must be scanned and for which an access time must be calculated, the shortest access time first algorithm divides the disc into a number of bins. The commands in the command queue are grouped based on the location addressed by each particular command. The bins are then searched in an order determined by a current position of read/write element. The order of bins to be searched based upon the current location of the read/write element is precomputed and stored in an array indexed by the position of the read/write element. The list of bin orderings may require about eight kilobytes of memory for a disc divided into 64 bins.

To select a command for execution, the algorithm calculates an access time for each of the commands grouped into the first non-empty bin found. After the access time for each of the commands is calculated, the command having the shortest access time is generally executed. However, some bins contain cylinders on both sides of the rotational latency line or head trajectory. In other words, some bins may contain only command addresses that can only be accessed in two revolutions. To cope with scenarios where the first non-empty bin contains only command addresses outside of the rotational latency line or head trajectory, the algorithm additionally requires that a threshold value be calculated and stored for each bin or cell. The threshold value represents the largest possible access time a command may have to be executed. After an access time is calculated for each and every command location with the particular bin being scanned, the best or smallest access time of all the commands is compared with the threshold value. If the best access time of all the commands is below the threshold value, the command having the lowest access time is executed. However, if the best access time of all the command addresses within the bin is greater than the threshold value, the algorithm repeats by scanning all of the commands and calculating an access time for all of the commands in the next non-empty bin.

Although the shortest access time first scheduling algorithm is an improvement over sorting algorithms which merely minimize seek time between commands, the shortest access time first algorithm has several drawbacks. First, the shortest access time first method is extremely time consuming for commands which address clustered locations on the disc. In the operation of many systems, the command queue may, at any one moment, contain a set of commands which address locations that are clustered in a particular area of the disc. As a result, a single bin may contain an extremely large number of command addresses. Because the shortest access time first algorithm requires that the access time be calculated for each and every command address within the particular bin, the algorithm is extremely time consuming for a bin containing clustered addresses for a large number of commands.

Second, the shortest access time first algorithm requires a significant amount of memory. As discussed above, the shortest access time first algorithm requires an array indexed by a position of the read/write element which lists a bin search order for each possible starting bin. In addition, the algorithm further requires an array containing threshold values for each bin. The eight kilobytes of memory required for the array is significant compared to the amount of memory available on some disc drives.

Another improved method of sorting would be to choose the next command to be executed by searching the command queue to find the command with the shortest access time. Although this does not result in a guaranteed minimum sum of all command access times, it comes relatively close.

To compute the access time of an arbitrary command, the disc drive controller firmware must first compute the seek time for the command. The seek time is the time required to move the read/write element from the present track to the desired track. Next, it must determine the expected rotational position of the disc drive after the seek is complete. Since different disc drives will have different seek characteristics, the firmware must provide for some margin of error when computing seek times. For very long seeks, this margin of error may be quite large and hence, impractical for implementation of the present invention. A sorting algorithm which minimizes rotational latency for commands with relatively short seeks, however, would be a significant contribution to the art.

This invention provides, in a system including a transducing element (12) and a rotating medium (10), a method for decreasing rotational latency comprising:
a) dividing said medium into a plurality of discrete angular regions;
b) defining a seek range by identifying, for each discrete angular region, a number of cylinders that may be traversed by said transducing element during a period for said medium to rotate through a predetermined number of discrete angular regions, characterised by:
c) assigning a rotational latency to each discrete angular region based on a current location of said transducing element;
d) searching a command queue array for a command addressing a location in said seek range and in a discrete angular region having a lowest rotational latency;
e) moving said transducing element to a location addressed by said command and executing said command; and
f) removing said command from said command queue array.

The present invention is a method to minimize rotational latency for short seeks. More particularly, the method requires the firmware to search the command queue for commands which have a starting logical block address (LBA) that is 0.1 to 0.2 of a revolution away from the current rotational position of the read/write element. If one of these commands has a starting cylinder number which is close enough to the current cylinder position of the read/write element to allow a seek to complete within 0.1 of a revolution, then that particular command is executed. Otherwise, the firmware searches the command queue for commands with a starting LBA that is within 0.2 to 0.3 of a revolution away from the current position of the read/write element. If a command can be completed within a seek time of 0.2 of a revolution or less, then that particular command will be executed. If no such command is available, the firmware searches for commands with a starting LBA that is 0.3 to 0.4 of a revolution away, etc. If no commands are found which can be accessed within one revolution of the disc, the firmware searches the command queue for the command which has the shortest expected seek time.

The firmware must have some method of determining the difference in rotational position between two LBAs. Although this could be accomplished by converting the LBA numbers into a physical address (i.e. cylinder, head, sector) the sector numbers of LBAs in different recording zones cannot be compared easily. To resolve this situation, the method requires the firmware to divide the disc into a number (e.g. 100) of discrete angular regions. For the purpose of sorting the queue, the starting and ending LBA for each command is converted into a cylinder, head, and angular region address. The angular region numbers (e.g. N=1...N=100) provide a common system of measurement for all LBAs regardless of recording zone. These angular region numbers are always treated "modulo 100". For example, the difference in rotational position from angular region 90 to angular region 5 is 15. The firmware treats an angular region difference of 10 to 19 as 0.1 of a revolution and 20 to 29 as 0.2 of a revolution, etc.

Embodiments of the invention will now be described by way of example only, with reference to the accompanying diagrammatic figures in which;
Figure 1 shows a plan view of a rotating disc, portions of the disc which can be reached within one revolution of the current position of the read/write element are shaded;
Figure 2 shows the rotating disc of Figure 1 divided into discrete angular regions as required by the method of the present invention; and
Figure 3 is a flow diagram of the steps of the method of the present invention and is split between Figures 3A and 3B, identical parts having the same reference numerals throughout.

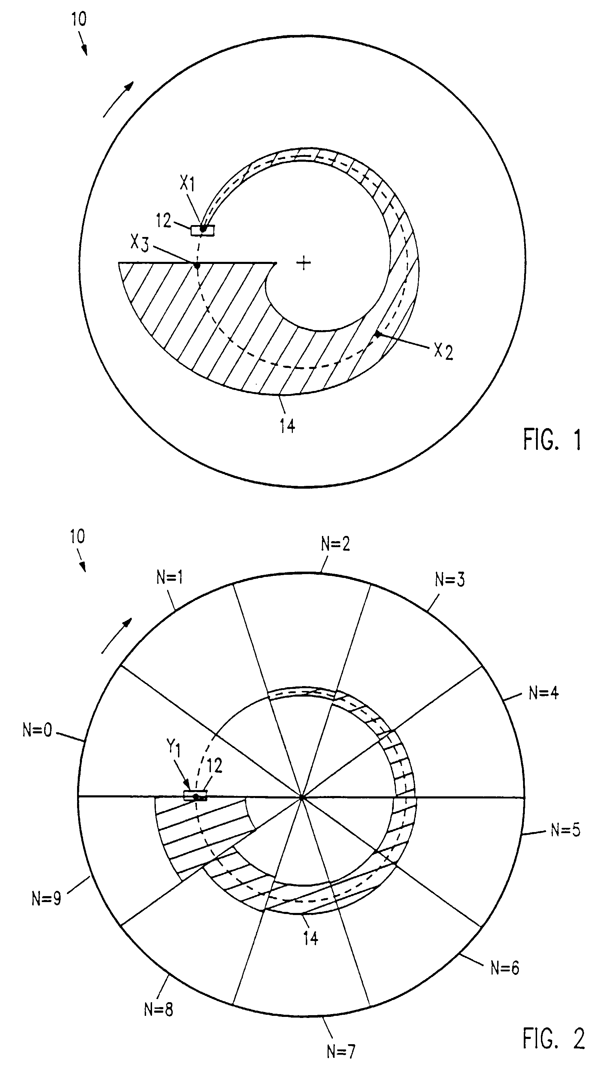

Figure 1 shows a plan view of rotating disc 10. Read/write element 12 is shown positioned at location X₁ on disc 10. Shaded area 14 represents the seek range [N] or the number of cylinders that can be traversed by read/write element 12 during one disc revolution from its current position at point X₁. For example, assume that read/write element 12 is able to cross a total of 200 cylinders in one revolution of disc 10. More particularly, within one revolution, starting from point X₁, read/write element 12 will be able to traverse 200 cylinders. At point X₁, shaded region 14 is very small because a very small percentage of the disc revolution is complete. At point X₂, however, half of a revolution has passed. The number of cylinders that read/write element 12 can traverse within half a disc revolution is approximately 80-120 cylinders. Correspondingly, the width of shaded area 14 at point X₂ has significantly increased with respect to the amount of shaded area at point X₁. At point X₃, an entire disc revolution is almost complete. Accordingly, the portion of shaded area 14 immediately adjacent point X₃ represents the greatest area of the disc that may be crossed in one revolution (approximately 200 cylinders).

Figure 2 shows rotating disc 10 and shaded area 14 of Figure 1 modelled in discrete angular regions as required by the method of the present invention. More particularly, disc 10 is divided into ten angular regions labelled N=1, N=2, N=3...N=9, N=10 wherein "N" is relative to the current actuator position.

In operation, read/write element 12 may be positioned at point Y₁ which is the boundary between regions N=9 and N= 10. The method requires the firmware to initially search the command queue for an executable command within the angular region labelled N=1. If a command is found within region N=1, the firmware then determines if the number of cylinders read/write element 12 must traverse to reach the start of the found command is within the seek range for that particular angular region. If the command is within the seek range (i.e. the shaded area), the command is executed. If no command is found within the seek range, the firmware searches the command queue for a command within the seek range of the next angular region N=2.
Each angular region is searched in a clockwise fashion until an entire revolution of the disc is complete. If no commands can be found within any of the seek ranges (i.e. shaded areas) of each region, the firmware executes the command which requires the shortest seek time with respect to the current position of the read/write element.

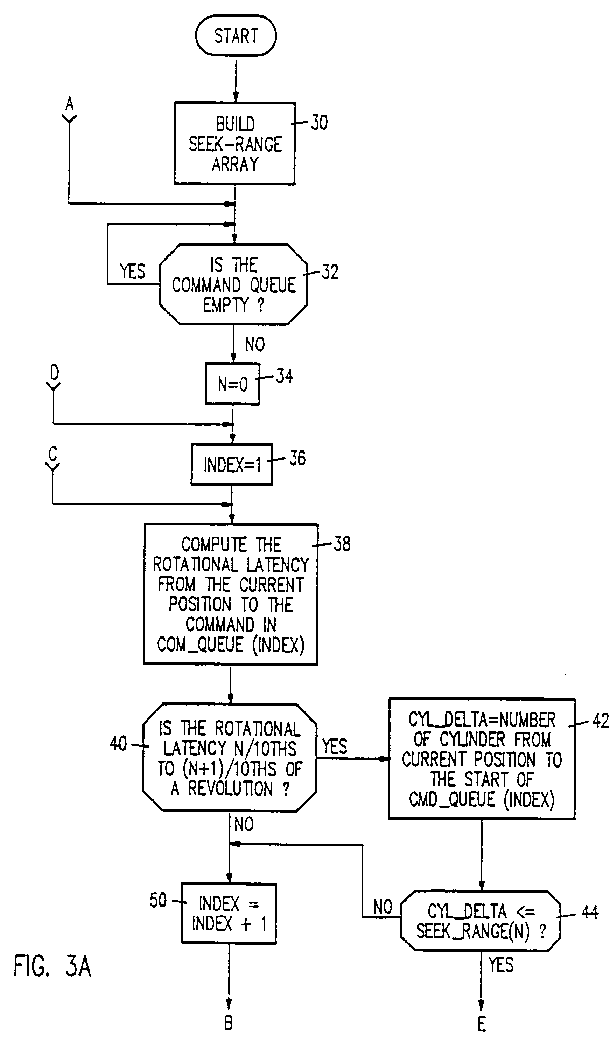

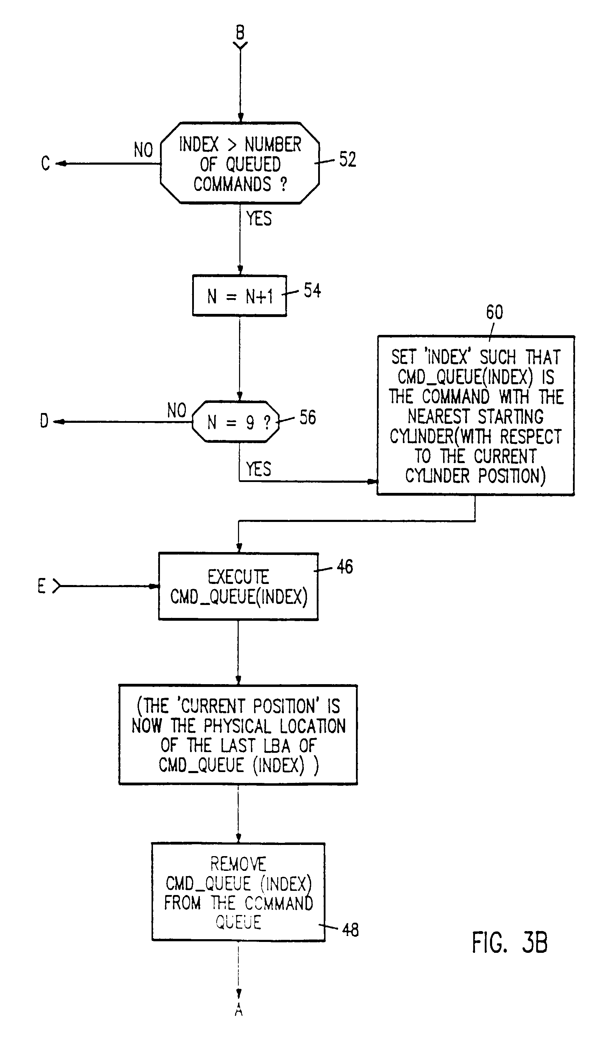

Figure 3 is a flow diagram of the steps of the method of the present invention. In step 30, a seek range array is built. The seek range array is indexed according to time in units of tenths of a revolution. Each element of the array contains the number of cylinders which can be crossed in the amount of time corresponding to the element's index. For example, seek range [3]=100 means that a seek can cross 100 cylinders in 3/10 of a revolution.

In step 32, the firmware determines if the command queue is empty. As long as the queue is empty, no action will be taken. Note, however, that commands may be added to the command queue at any time. In step 34, it has been determined that the command queue is not empty, so the firmware targets angular region N= 1 by initialising N at 1. In step 36, the firmware accesses the first command (i.e. index=1) of the command queue index. The command queue index is an array that contains each command in the command queue. Thus, command queue [1] is the first command in the queue, command queue [2] is the second command, etc.

In step 38, the firmware computes the rotational latency from the current position of the read/write element to the position of the command in command queue [1].

In step 40, the firmware determines if the rotational latency computed in step 38 is N/10ths to (N+1)/10ths of a revolution away from the current position of the read/write element (i.e. within the parameters of region N=1). If the rotational latency falls within the parameters which define angular region N=1, in step 42, the "cylinder delta" is computed. The cylinder delta is the number of cylinders from the current position of the read/write element to the start cylinder of the command in command queue [1].

In step 44, the firmware determines if the cylinder delta is less than or equal to seek range of angular region N = 1. The decision in step 44 determines whether command queue [1] is in the shaded area of angular region N=1. If it is determined that the cylinder delta is within the shaded area, step 46 requires execution of the command in command queue [1]. Upon execution of the command, the current position of the read/write element is now the physical location of the last LBA of the command just executed (i.e. command queue [1]). In step 48, command queue [1] is removed from the command queue array.

If after step 40, the firmware determines that the rotational latency is not within N/10ths to (N+1)/10ths of a revolution away from the current position of the read/write element, or if after step 44 it is determined that the cylinder delta is greater than the seek range [N] of that particular angular region, the command queue index is increased by one in step 50.

In step 52, the firmware verifies that it has checked all commands to determine if they meet the parameters of N= 1. The verification is accomplished by finding if the index number is greater than the number of commands. If the index number is less than the number of commands, the firmware returns to step 38. If the index number is greater than the number of queued commands, in step 54, the firmware targets the next succeeding angular region N=N+1.

In step 56, the firmware determines if an entire disc revolution's worth of regions have been searched. In this example, an entire disc revolution's worth of regions has been searched if N=11. If an entire disc revolution's worth of regions have not been searched (i.e. N< 11), the method requires the firmware to return to step 36 to begin the search procedure again for the angular region N=N+1.

If N=11, however, a new protocol is instigated. More particularly, in step 60, the firmware searches the command queue for the command with the nearest starting cylinder with respect to the current cylinder position of the read/write element. Once this command is found, the "index" of this command is set. Upon completion of step 60, the method requires the firmware to execute the command and remove it from the queue in accordance with steps 46 and 48, respectively.

The method is a practical way to significantly reduce the amount of access time associated with short seeks in memory assemblies which employ a rotational storage medium. By searching the command queue to find and execute the command with the shortest access time, the efficiency of data retrieval is enhanced.

The aforegoing description has been given by way of example only and it will be appreciated by a person skilled in the art that modifications can be made without departing from the scope of the present invention.

## Claims

1. A method for decreasing rotational latency in a system including a transducing element (12) and a rotating medium (10), the method comprising :
a) dividing said medium into a plurality of discrete angular regions;
b) defining a seek range by identifying, for each discrete angular region, a number of cylinders that may be traversed by said transducing element during a period for said medium to rotate through a predetermined number of discrete angular regions, and
characterised by:
c) assigning a rotational latency to each discrete angular region based on a current location of said transducing element;
d) searching a command queue array for a command addressing a location in said seek range and in a discrete angular region having a lowest rotational latency;
e) moving said transducing element to a location addressed by said command and executing said command; and
f) removing said command from said command queue array.

2. A method as claimed in claim 1, wherein said seek range (14) represents a number of cylinders that may be traversed by said transducing element within a single revolution of said medium.

3. A method as claimed in claim 1 or claim 2, wherein step b) further comprises creating a seek-range array having stored seek ranges corresponding to each discrete angular region.

4. A method as claimed in any preceding claim, further comprising defining a new seek range, assigning a new rotational latency to each discrete angular region based on a position of said transducing element following movement to a location addressed by a first-named command, searching said command queue array for a second command addressing a location in a new seek range and in a discrete angular region having a new lowest rotational latency, moving said transducing element to a location addressed by said second command, and executing said second command.

5. A method as claimed in any preceding claim, wherein step d) is performed for each angular region in succession.

## Patentansprüche

1. Verfahren zur Verringerung der Rotationslatenz in einem System, das ein Wandlerelement (12) und ein rotierendes Medium (10) einschließt, wobei das Verfahren folgende Schritte umfaßt:
a) Unterteilen des Mediums in eine Vielzahl von diskreten Winkelbereichen,
b) Definieren eines Suchbereiches, indem für jeden diskreten Winkelbereich eine Anzahl von Zylindern identifiziert wird, die von dem Wandlerelement während einer Zeitperiode durchlaufen werden können, die das Medium benötigt, um sich über eine vorgegebene Anzahl von diskreten Winkelbereichen zu drehen,
gekennzeichnet durch:
c) Zuordnen einer Rotationslatenz zu jedem diskreten Winkelbereich auf der Grundlage einer derzeitigen Position des Wandlerelements,
d) Durchsuchen eines Befehlswarteschlangen-Datenfeldes nach einem Befehl, der eine Position in dem Suchbereich und in einem diskreten Winkelbereich adressiert, der die niedrigste Rotationslatenz aufweist,
e) Bewegen des Wandlerelements auf eine von dem Befehl adressierte Position und Ausführen des Befehls, und
f) Entfernen des Befehls aus dem Befehlswarteschlangen-Datenfeld.

2. Verfahren nach Anspruch 1,
bei dem der Suchbereich (14) eine Anzahl von Zylindern darstellt, die von dem Wandlerelement innerhalb einer einzigen Umdrehung des Mediums überquert werden können.

3. Verfahren nach Anspruch 1 oder 2,
bei dem der Schritt b) weiterhin die Schaffung eines Suchbereichs-Datenfeldes mit gespeicherten Suchbereichen aufweist, die jedem diskreten Winkelbereich entsprechen.

4. Verfahren nach einem der vorhergehenden Ansprüche,
das weiterhin die Definition eines neuen Suchbereiches, die Zuordnung einer neuen Rotationslatenz zu jedem diskreten Winkelbereich auf der Grundlage einer Position des Wandlerelementes nach einer Bewegung auf eine Position, die durch einen erstgenannten Befehl adressiert ist, das Durchsuchen des Befehlswarteschlangen-Datenfeldes nach einem zweiten Befehl, der eine Position in dem neuen Suchbereich und in einem diskreten Winkelbereich adressiert, der eine neue niedrigste Rotationslatenz aufweist, die Bewegung des Wandlerelements auf eine durch den zweiten Befehl adressierte Position und die Ausführung des zweiten Befehls umfaßt.

5. Verfahren nach einem der vorhergehenden Ansprüche,
bei dem der Schritt d) für jeden Winkelbereich aufeinanderfolgend ausgeführt wird.

## Revendications

1. Procédé destiné à diminuer la latence rotationnelle dans un système comprenant un élément de transduction (12) et un support rotatif (10), le procédé comprenant :
a) la division dudit support en une pluralité de régions angulaires distinctes ;
b) la définition d'une plage de recherche en identifiant, pour chaque région angulaire distincte, un nombre de cylindres qui est susceptible d'être traversé par ledit élément de transduction durant une période pour permettre audit support d'effectuer une rotation à travers un nombre prédéterminé de régions angulaires distinctes, caractérisé en ce que :
c) l'attribution d'une latence rotationnelle à chaque région angulaire distincte sur la base d'un emplacement courant dudit élément de transduction ;
d) la recherche d'un groupe de file d'attente de commandes pour une commande adressant un emplacement dans ladite plage de recherche et dans une région angulaire distincte ayant une latence rotationnelle inférieure ;
e) le déplacement dudit élément de transduction vers un emplacement adressé par ladite commande et l'exécution de ladite commande ; et
f) l'enlèvement de ladite commande dudit groupe de file d'attente de commande.

2. Procédé selon la revendication 1, dans lequel ladite plage de recherche (14) représente un nombre de cylindres qui peut être traversé par ledit élément de transduction à l'intérieur d'une seule révolution dudit support.

3. Procédé selon la revendication 1 ou la revendication 2, dans lequel l'étape b) comprend en outre la création d'un groupe de plage de recherche stockant les plages de recherche correspondant à chaque région angulaire distincte.

4. Procédé selon l'une quelconque des revendications précédentes, comprenant en outre la définition d'un nouveau groupe de plage de recherche, l'attribution d'une nouvelle latence rotationnelle à chaque région angulaire distincte qui se base sur une position dudit élément de transduction suivant le déplacement vers un emplacement adressé par une commande nommée, la recherche dudit groupe de file d'attente de commandes pour une seconde commande adressant un emplacement dans une nouvelle plage de recherche et dans une région angulaire distincte ayant une nouvelle latence de rotation inférieure, déplaçant ledit élément de transduction vers un emplacement adressé par ladite seconde commande, et l'exécution de la deuxième commande.

5. Procédé selon l'une quelconque des revendications précédentes, dans lequel l'étape d) est effectuée pour chaque région angulaire à la suite.
